# FASCICULE DE BREVET EUROPEEN

(11) **EP 1 849 720 B1**
(45) Date de publication et mention de la délivrance du brevet: **09.07.2014**
(21) Numéro de dépôt: 07300975.5
(22) Date de dépôt: 24.04.2007
(51) Int. Cl.: B65G 1/04, B65G 1/10

(54) **Dispositif de stockage vertical mobile**
Mobile vertikale Speichervorrichtung
Mobile vertical storage device

(30) Priorité: 26.04.2006 FR 0651466
(43) Date de publication de la demande: 31.10.2007
(73) Titulaire: Huber Automation (Société a Responsabilité Limitée), 67490 Dettwiller (FR)
(72) Inventeur: Huber, Pascal, 67490 Dettwiller (FR)
(74) Mandataire: Nuss, Laurent

(56) Documents cités:
- DE-A1- 3 524 141
- DE-A1- 4 142 355
- GB-A- 1 371 193
- US-A- 3 445 010
- US-A- 3 563 180
- US-A- 5 938 047

## Description

La présente invention concerne le domaine du stockage et de la manutention de produits finis ou semi-finis, notamment sous forme de profilés de grande longueur, en particulier au moyen de dispositifs de stockage vertical, et a pour objet un tel dispositif de stockage vertical mobile.

Actuellement, le stockage de tels produits, en particulier sous forme de profilés de grande longueur est généralement effectué au moyen de dispositifs de stockage vertical présentant un certain nombre de rayons superposés fixés à des supports verticaux, ces rayons étant parallèles entre-eux de part et d'autre des supports. De tels dispositifs permettent de répondre favorablement à un problème de stockage de tels profilés. Cependant, le prélèvement des produits qui doit généralement être effectué au moyen de chariots de manutention motorisés nécessite, soit la mise en oeuvre de chariots spécifiquement adaptés à une circulation entre des rangées de dispositifs de stockage vertical, du type chariot à chargement latéral, soit des surfaces d'évolution des chariots importantes entre deux dispositifs de stockage vertical.

Pour obvier à cet inconvénient, il a été proposé de disposer des dispositifs de stockage vertical le long des murs d'un local, les rayonnages n'étant prévus que d'un côté des supports. Dans un tel cas, un accès au moyen d'un chariot de manutention habituel est possible. Toutefois, un tel mode de stockage nécessite également une surface d'évolution importante et, en tous cas, la surface disponible entre les dispositifs disposés le long des murs est inutilisable.

On connaît également des entrepôts de stockage construits spécifiquement à cet effet et dans lesquels des dispositifs de stockage vertical sont disposés parallèlement à leur axe longitudinal avec possibilité de déplacement sur des rails intégrés dans le sol des entrepôts. De tels dispositifs nécessitent, cependant, une infrastructure spéciale devant être conçue à l'origine de la construction de l'entrepôt et ne sont pas envisageables, par exemple, pour l'équipement d'un local devant être pourvu d'un nombre relativement réduit de dispositifs de stockage ou affecté partiellement à d'autres utilisations.

Ainsi, par exemple, US-A-3 563 180 décrit un chariot mobile guidé sur des rails, dont l'un sert essentiellement au guidage linéaire et dont les autres servent de support. De même, US-A-5 938 047 décrit également des moyens de guidage sur rails.

Cependant, il n'existe actuellement aucun moyen permettant un assujettissement au sol d'un dispositif de stockage, tout en assurant une possibilité de déplacement d'un élément mobile de ce dernier aux fins de manutention. Or, un tel assujettissement est d'autant plus nécessaire que le dispositif de stockage présente une hauteur importante et peut être lourdement chargé. En effet, dans un tel cas, si l'élément mobile subit un choc latéral ou une surcharge unilatérale, il existe un risque important de basculement ou de renversement pouvant exposer le personnel de service à un risque d'écrasement et entraînant en tout étant de cause d'importants dégâts matériels.

En outre, de tels dispositifs sur rails sont également très difficilement envisageables pour l'équipement de locaux ayant eu préalablement une autre vocation et qui nécessiteraient de ce fait d'importants travaux et des investissements correspondants.

La présente invention a pour but de pallier ces inconvénients en proposant un dispositif de stockage vertical mobile pouvant être facilement implanté dans des locaux existants, sans nécessiter de lourds travaux d'infrastructures, et parfaitement stabilisé contre un éventuel pivotement par rapport à un plan vertical médian, qui pourrait entraîner un renversement total sous une charge déséquilibrée ou sous un choc latéral.

A cet effet, le dispositif de stockage vertical mobile conforme à l'invention, qui est essentiellement constitué par un châssis horizontal, sur lequel sont montés, à intervalles réguliers, des supports d'appui horizontaux de réception et de stockage de produits longs, tels que des profilés, est caractérisé en ce que le châssis est mobile et coopère avec un moyen d'assujettissement au sol et de déplacement suivant son axe longitudinal.

L'invention sera mieux comprise grâce à la description ci-après, qui se rapporte à des modes de réalisation préférés, donnés à titre d'exemples non limitatifs et expliqués avec référence aux dessins schématiques annexés, dans lesquels :
la figure 1 est une vue en perspective d'un dispositif de stockage conforme à l'invention ;
la figure 2 est une vue en élévation latérale du châssis mobile du dispositif suivant la figure 1,
la figure 3 est une vue de dessus du châssis mobile suivant la figure 2 ;
la figure 4 est une vue en élévation frontale et en coupe, à plus grande échelle, du dispositif ;
les figures 5 à 7 sont des vues analogues à celles des figures 1 à 3 d'une variante de réalisation de l'invention ;
la figure 8 est une vue partielle en élévation frontale et en coupe, à plus grande échelle, du dispositif selon les figures 5 à 7, au niveau de l'ensemble de déplacement ;
la figure 9 est une vue en élévation frontale représentant le montage de l'extrémité avant du châssis mobile, et
la figure 10 est une vue partielle en élévation latérale de l'extrémité avant du cadre intermédiaire.

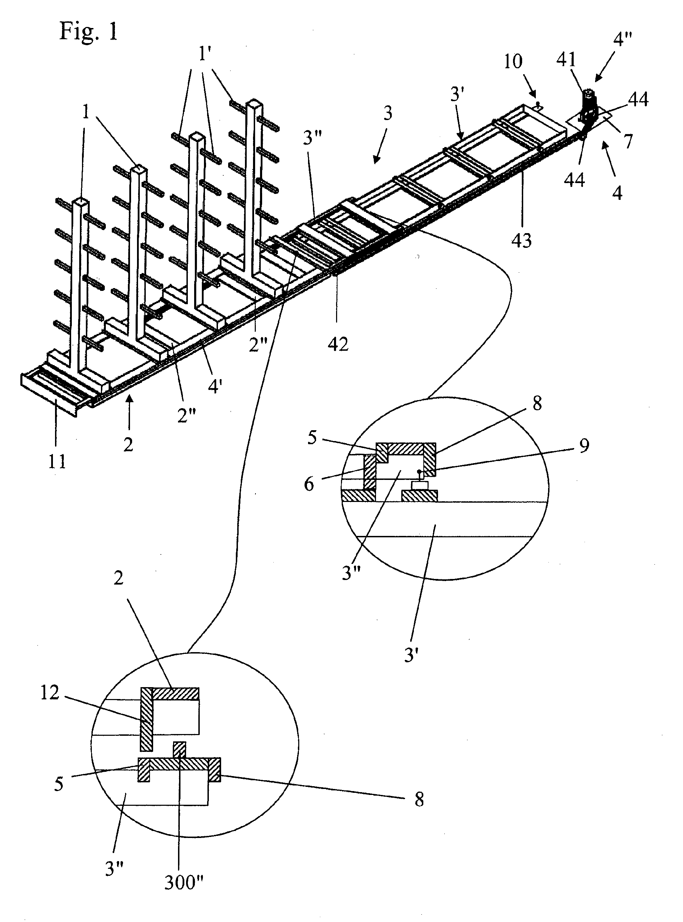

La figure 1 des dessins annexés représente un dispositif de stockage conforme à l'invention, qui est essentiellement constitué par un châssis horizontal 2, sur lequel sont montés, à intervalles réguliers, des supports 1 d'appui horizontaux l' de réception de produits longs, tels que des profilés.

Conformément à l'invention, le châssis 2 est mobile et coopère avec un moyen 3 d'assujettissement au sol et de déplacement suivant son axe longitudinal.

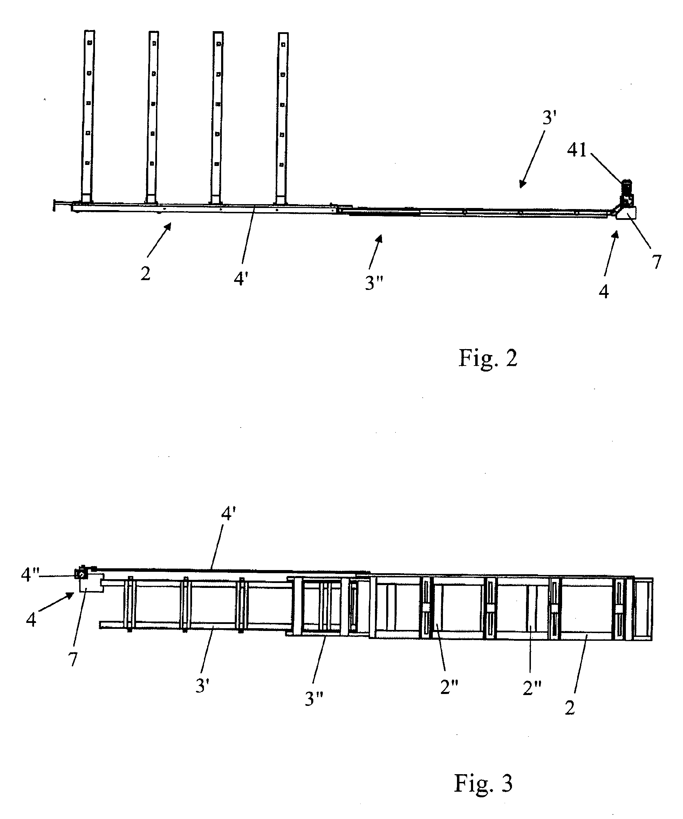

Selon une caractéristique de l'invention, le moyen 3 d'assujettissement au sol et de déplacement suivant son axe longitudinal est constitué, comme le montrent plus particulièrement les figures 2 à 4 des dessins annexés, d'une part, par un cadre 3' d'ancrage au sol et par un cadre intermédiaire 3", guidé sur le cadre 3' d'ancrage au sol et formant un guidage et un support du châssis mobile 2 et, d'autre part, par un ensemble 4 de déplacement du châssis mobile 2 et du cadre intermédiaire 3".

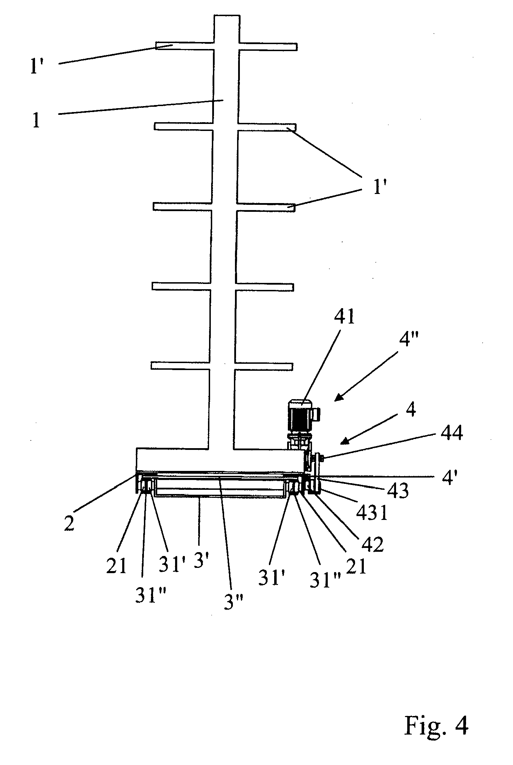

Le châssis mobile 2 et les cadres intermédiaire 3" et d'ancrage au sol 3' sont montés de manière télescopique les uns dans les autres, le cadre intermédiaire 3" étant, d'une part, guidé sur le cadre d'ancrage au sol 3' et, d'autre part, servant de guidage au châssis mobile 2 (figure 4).

De préférence, le cadre intermédiaire 3" est muni, à son extrémité opposée à celle pouvant être déplacée vers l'extérieur du cadre 3' d'ancrage au sol, d'une butée 5 de fin de course de sortie coopérant avec un élément 6, en saillie dudit cadre 3' d'ancrage au sol ou directement fixé au sol. Il en résulte que le cadre intermédiaire 3" reste guidé sur le cadre 3' d'ancrage au sol sur une partie de sa longueur et que le châssis mobile 2 reste guidé sur le cadre intermédiaire 3", lorsque le châssis mobile est entièrement sorti par rapport au cadre 3' d'ancrage au sol, de sorte que le maintien stable du châssis mobile 2 est assuré.

Le cadre 3' d'ancrage au sol et le châssis mobile 2 sont avantageusement réalisés sous forme de deux cornières superposées, décalées entre elles et équipées chacune avec des galets respectifs 31' et 21 prévus sur leur aile verticale et s'appuyant sur des profilés longitudinaux 31" équipant les bords correspondants du cadre intermédiaire 3", sous ce dernier, les galets 31' et 21 étant des galets combinés à portée radiale et guidage latéral s'appuyant de part et d'autre dans les profilés longitudinaux 31", de telle manière que le châssis mobile 2 peut se déplacer sur le cadre intermédiaire 3" sans frotter sur le cadre 3' d'ancrage au sol, un déplacement de l'ensemble cadre intermédiaire 3" et châssis mobile 2 étant ainsi possible.

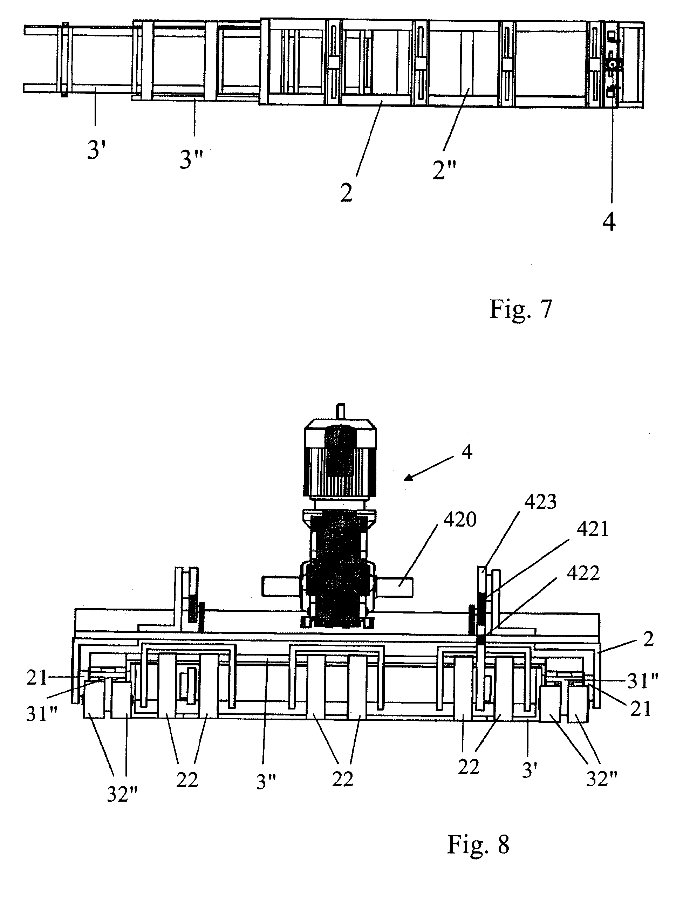

Selon une caractéristique de l'invention, le châssis mobile 2 est équipé, comme le montre la figure 8 des dessins annexés, à son extrémité avant, d'au moins une paire de galets à axe horizontal d'appui au sol 22, qui est montée pivotable, par l'intermédiaire d'un palier à axe vertical, sur ledit châssis mobile 2. De préférence, il est prévu trois paires de galets à axe horizontal d'appui au sol 22 réparties uniformément sur la largeur de la partie avant du châssis mobile 2.

En outre, le cadre intermédiaire 3" est avantageusement pourvu, à son extrémité avant, de deux paires de galets à axe horizontal d'appui au sol 32", qui sont montées pivotables, chacune par l'intermédiaire d'un palier à axe vertical, sur ledit cadre intermédiaire 3", de part et d'autre de son extrémité avant, en prolongement des profilés 31" le constituant et au moins partiellement dans l'axe des galets combinés à portée radiale et guidage latéral 21 du châssis mobile 2.

Ainsi, lors du déplacement du châssis mobile 2 et du cadre intermédiaire 3", hors du cadre 3' d'ancrage au sol, les légères déviations possibles par rapport à l'axe longitudinal du dispositif peuvent être compensées automatiquement par les rouleaux formant les paires de galets 32" et 22 dudit cadre intermédiaire 3" et dudit châssis mobile 2, ce en correspondance avec l'effet de guidage rectiligne assuré latéralement sur lesdits cadre 3" et châssis 2 par les galets combinés à portée radiale et guidage latéral 31' et 21.

Selon une autre caractéristique de l'invention, les galets combinés à portée radiale et guidage latéral 21 du châssis mobile 2 sont disposés sur les ailes verticales des cornières formant le châssis mobile 2, sur une partie de la longueur de ces dernières s'étendant à partir de l'extrémité arrière dudit châssis mobile 2 qui correspond à la longueur de chevauchement du châssis mobile 2 sur le cadre intermédiaire 3", lorsque le châssis mobile 2 est en position entièrement sortie par rapport au cadre 3' d'ancrage au sol. En effet, lors d'un déplacement de sortie du châssis mobile 2, ce dernier peut d'abord se déplacer seul sur le cadre intermédiaire 3", jusqu'à entrer en butée, par ses galets combinés à portée radiale et guidage latéral 21 les plus proche de son extrémité avant, avec les paires de galets à axe horizontal d'appui au sol 32" dudit cadre intermédiaire 3", qui est alors entraîné dans le mouvement de sortie.

L'ensemble 4 de déplacement châssis mobile 2 et du cadre intermédiaire 3" (figures 1 à 3) est constitué par une partie 4' solidaire du châssis mobile 2 et par une partie 4" coopérant avec la partie 4' et fixée sur un support 7 pouvant être solidarisé avec l'extrémité du cadre 3' d'ancrage au sol opposée à celle de sortie du châssis mobile 2.

Dans le mode de réalisation de l'invention représenté aux figures 1 à 4 des dessins annexés, la partie 4' de l'ensemble 4, qui est solidaire du châssis mobile 2 est constituée sous forme d'une crémaillère et la partie 4" est constituée par un ensemble motoréducteur 41 fixé sur le support 7 de l'extrémité du cadre 3' d'ancrage au sol, entraînant un pignon d'entraînement 42 disposé à l'extrémité opposée dudit cadre 3' d'ancrage au sol par l'intermédiaire d'une chaîne 43 et de roues à chaîne 44.

En outre, le châssis mobile 2 est avantageusement pourvu à son extrémité arrière, opposée à celle de sortie hors du cadre 3' d'ancrage au sol, d'une butée 8 de fin de course de sortie et de rétraction coopérant respectivement avec des contacts de fin de course de sortie 9 et de rétraction 10 prévus sur le cadre 3' d'ancrage au sol, ces contacts de fin de course réalisant l'arrêt automatique de l'ensemble motoréducteur 41 de l'ensemble 4 de déplacement du cadre intermédiaire 3" et du châssis mobile 2, à l'arrivée dans les positions extrêmes du châssis mobile 2.

L'ensemble 4 de déplacement du châssis mobile 2 et du cadre intermédiaire 3" est avantageusement commandé par l'intermédiaire d'une armoire de commande du type connu comportant au moins un interrupteur marche / arrêt et un interrupteur de sécurité, cette armoire de commande étant reliée, par ailleurs, aux butées de fin de course de sortie 9 et de rétraction 10, ainsi qu'à un moyen de sécurité 11 de mise à l'arrêt automatique prévu à l'extrémité du châssis mobile 2 sortant du cadre intermédiaire 3" et du cadre d'ancrage au sol 3', ce moyen de sécurité étant, par exemple, un bouclier mobile, muni d'un interrupteur.

Lors de l'actionnement de l'ensemble 4 de déplacement châssis mobile 2 et du cadre intermédiaire 3" châssis mobile 2, la partie 4", constituée par l'ensemble motoréducteur 41 fixé sur le support 7 de l'extrémité du cadre 3' d'ancrage au sol, entraîne le pignon d'entraînement 42 disposé à l'extrémité opposée dudit cadre 3' d'ancrage au sol par l'intermédiaire de la chaîne 43 et des roues à chaîne 44 et ledit pignon, en engrenant avec la crémaillère formant la partie 4' de cet ensemble et qui est solidaire du châssis mobile 2, réalise l'entraînement dudit châssis mobile 2 en direction de sa sortie hors du cadre 3' d'ancrage au sol. Au cours du début de ce déplacement, le châssis mobile 2 est seul en mouvement, comme expliqué plus haut. Ensuite, comme également déjà expliqué, les galets combinés à portée radiale et guidage latéral 21 du châssis mobile 2, situés le plus à l'avant, entraîne dans leur mouvement le cadre intermédiaire 3" pour la poursuite de la sortie du châssis mobile 2.

Lorsque le cadre intermédiaire 3" est entraîné hors du cadre 3' d'ancrage au sol d'une longueur correspondant sensiblement à la moitié de sa longueur, la butée 5 de fin de course de sortie de ce dernier entre en contact avec l'élément en saillie 6 du cadre 3' d'ancrage au sol, empêchant toute sortie complémentaire et l'entrée en contact de la butée 8 de fin de course de sortie du châssis mobile 2 avec le contact de fin de course de sortie 9 prévu sur le cadre 3' d'ancrage au sol, délivre un signal d'arrêt automatique de l'ensemble motoréducteur 41 de l'ensemble 4 de déplacement du châssis mobile 2 et du cadre intermédiaire 3".

Selon une autre caractéristique de l'invention, le châssis mobile 2 présente à son extrémité arrière, à savoir à l'extrémité restant guidée dans le cadre intermédiaire 3", un élément d'entraînement 12 légèrement en saillie sous ladite extrémité dudit châssis mobile 2 et pouvant coopérer avec une traverse d'extrémité 300" du cadre intermédiaire 3". Ainsi, lors d'un mouvement de rétraction du châssis mobile 2 dans sa position de stockage habituel, ledit châssis mobile 2 entraîne le cadre intermédiaire 3" dans son mouvement de rétraction, dès qu'il a effectué, dans ledit cadre intermédiaire 3", un déplacement correspondant à celui de son déplacement initial hors dudit cadre 3". Ce déplacement du châssis mobile 2 peut être effectué, soit entièrement pendant que le cadre intermédiaire 3" est dans sa position maximale de sortie, soit partiellement avec le déplacement du cadre intermédiaire 3", la mise en butée de l'élément d'entraînement 12 assurant uniquement une rétraction complète du cadre intermédiaire 3".

A l'arrivée du châssis mobile 2 en fin de course de rétraction, sa butée 8 de fin de course de rétraction appuie sur le contact de fin de course de rétraction 10 prévu sur le cadre 3' d'ancrage au sol, ce qui a pour effet de réaliser l'arrêt automatique de l'ensemble motoréducteur 41 de l'ensemble 4 de déplacement du cadre intermédiaire 3" et du châssis mobile 2.

Le cadre 3' d'ancrage au sol est rigidifié transversalement par l'intermédiaire de traverses planes servant simultanément à l'ancrage au sol par l'intermédiaire de tire-fonds ou analogues, une traverse reliant les rails formant les côtés de ce cadre 3' servant simultanément de support à l'élément en saillie 6 destiné à coopérer avec la butée de fin de course de sortie 5 du cadre intermédiaire 3". Ce dernier est rigidifié transversalement par l'intermédiaire de profilés de liaison s'étendant à une distance du sol suffisante pour assurer un déplacement du cadre intermédiaire 3" sans risque d'accrochage avec un élément de fixation du cadre 3' d'ancrage ou avec l'élément en saillie 6 de ce cadre destiné à coopérer avec la butée de fin de course 5.

Enfin, le châssis mobile 2 est constitué par les rails longitudinaux portant les galets combinés à portée radiale et guidage latéral 21 coopérant avec les profilés longitudinaux 31" du cadre intermédiaire 3", ces rails étant rigidifiés transversalement par des traverses profilées transversales 2", entre lesquelles sont montées les bases des supports 1 d'appui horizontaux l' de réception de produits longs, tels que des profilés. Ainsi, les supports 1 sont parfaitement maintenus sur le châssis mobile 2, qui est lui-même guidé de manière parfaitement rigide par rapport au sol, par l'intermédiaire du cadre intermédiaire 3" et du cadre 3' d'ancrage au sol.

La réalisation des cadres 3' et 3" et du châssis mobile 2 de la manière décrite ci-dessus assure une parfaite rigidité et le maintien stable de ces cadres et châssis, aussi bien en position sortie du châssis mobile 2, qu'en position rétractée de ce dernier.

Par ailleurs, le cadre 3' d'ancrage au sol est pourvu, d'une part, d'un moyen 431 de guidage de la chaîne 43, ainsi que de dispositifs de réglage de la tension de cette dernière par l'intermédiaire des roues à chaîne 44 et, d'autre part, d'au moins une gaine repliable de protection des conducteurs électriques de connexion des contacts de fin de course 9 et 11.

L'invention a été décrite ci-dessus à propos d'un seul dispositif de stockage vertical mobile. Cependant, il est possible de réaliser, selon une autre caractéristique de l'invention, un entraînement de plusieurs dispositifs mobiles, successivement ou simultanément par prévision d'un moyen d'entraînement à embrayage.

A cet effet, ce moyen d'entraînement à embrayage, non représenté, peut avantageusement être constitué sous forme d'un embrayage à crabots, dont les crabots sont montés de manière fixe sur l'arbre d'entraînement de l'ensemble motoréducteur fixé sur le support de l'extrémité du cadre d'ancrage au sol, les crabots étant montés fous et avec possibilité de déplacement par coulissement au moyen d'une fourche de commande ou analogue sur ledit arbre d'entraînement et étant pourvu chacun d'une roue à chaîne d'entraînement d'une chaîne pour la commande du pignon d'entraînement disposé à l'extrémité opposée du cadre d'ancrage au sol. Le fonctionnement d'un tel embrayage à crabots est parfaitement connu de l'homme du métier et n'est pas expliqué plus en détail.

L'utilisation d'un tel embrayage permet de commander plusieurs dispositifs de stockage mobile disposés parallèlement, successivement ou par groupe au moyen d'une seule unité motorisée.

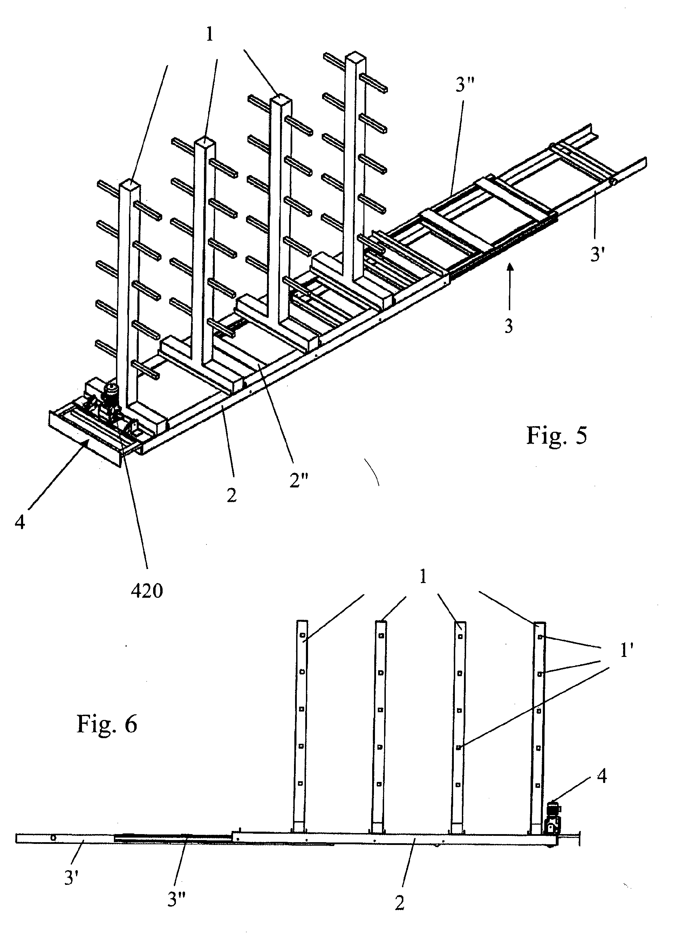

Conformément à un autre mode de réalisation de l'invention, représenté aux figures 5 à 8 des dessins annexés l'ensemble 4 de déplacement du châssis mobile 2 et du cadre intermédiaire 3" est un ensemble motoréducteur monté sur la partie distale dudit châssis mobile 2 et entraînant directement au moins un rouleau d'appui et de déplacement 21 du châssis mobile 2. A cet effet, l'ensemble motoréducteur formant l'ensemble 4 de déplacement du châssis mobile 2 et du cadre intermédiaire 3" entraîne un rouleau d'appui et de déplacement 21 du châssis mobile 2 par l'intermédiaire de son arbre de sortie 420 actionnant une paire de pignons de renvoi 421 reliés entre eux par une chaîne 422 et engrenant respectivement avec un pignon de commande 423 solidarisé avec l'arbre de sortie 420 et avec un pignon de transmission (non représenté) solidaire dudit rouleau d'appui et de déplacement 21. Une telle construction d'un entraînement est connue en soi et ne nécessite pas de description supplémentaire.

Un tel mode de réalisation de l'ensemble 4 de déplacement du châssis mobile 2 et du cadre intermédiaire 3" permet une simplification du dispositif, du fait que les éléments de transmission du mouvement sont rassemblés en un ensemble compact, ce qui évite les risques de pannes correspondantes. Les moyens de détection de fin de course, à savoir les butées et contacts, tels que décrits à propos du mode de réalisation selon les figures 1 à 4, ainsi que les moyens de commande, également décrits ci-dessus, peuvent être maintenus.

Conformément à une caractéristique de l'invention, dans ce mode de réalisation, les conducteurs électriques de connexion des contacts de fin de course et de raccordement électrique de l'ensemble 4 de déplacement du châssis mobile 2 et du cadre intermédiaire 3" peuvent également être regroupés dans un câble aérien suspendu à intervalles réguliers par l'intermédiaire d'oeillets à un câble en acier accroché par son extrémité libre en partie supérieure du support 1 d'appuis horizontaux l' de l'extrémité avant du châssis mobile 2, ce câble en acier étant monté sur un enrouleur automatique prévu sur un support disposé à l'extrémité arrière du cadre 3' d'ancrage au sol. Ainsi, l'ensemble des conducteurs électriques affecté au dispositif et devant être raccordé près de son extrémité avant, peut être facilement guidé et maintenu sans risquer une détérioration par l'intermédiaire de moyens de manutention ou autres.

Selon une variante de réalisation de l'invention, non représentée aux dessins annexés, l'ensemble 4 de déplacement du châssis mobile 2 et du cadre intermédiaire 3" peut également être constitué par un vérin télescopique s'appuyant par sa chape sur le support 7 solidaire de l'extrémité du cadre 3' d'ancrage au sol opposée à celle de sortie du châssis mobile 2 et par sa tige de vérin extrême sur traverse distale du châssis mobile 2, en traversant des passages correspondants du cadre intermédiaire 3" et du châssis mobile 2.

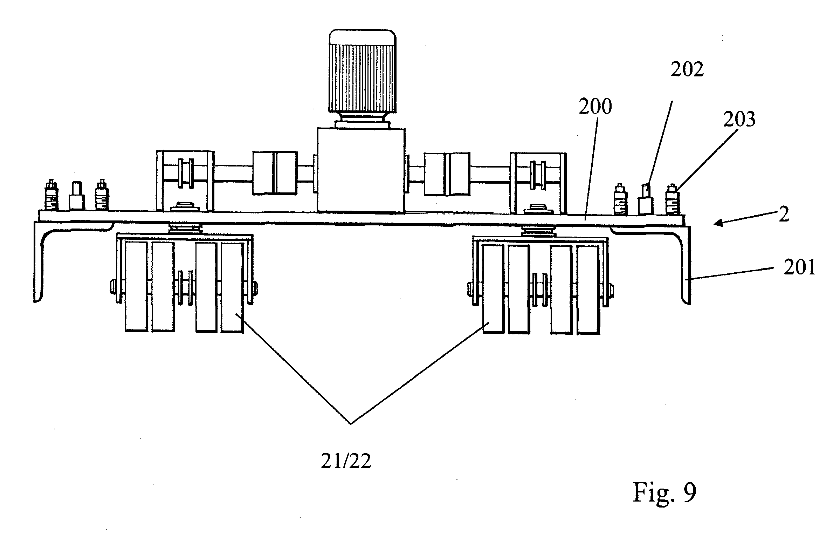

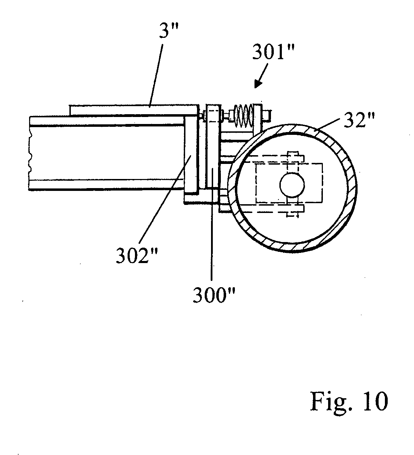

Conformément à une autre caractéristique de l'invention et comme le montrent les figures 9 et 10 des dessins annexés, le dispositif de stockage vertical mobile peut avantageusement être pourvu, en outre, de moyens de compensation des irrégularités du sol.

A cet effet, selon une première caractéristique de l'invention représentée à la figure 9 des dessins annexés, le châssis mobile 2 est pourvu à son extrémité avant d'un premier moyen de compensation des irrégularités du sol, sous forme d'une traverse 200 de réception des paliers des galets d'appui au sol 22 et/ou du ou des rouleaux d'appui et de déplacement 21, cette traverse 200 étant relié de manière mobile, à ses extrémités, aux longerons 201 du châssis mobile 2, par l'intermédiaire d'un guidage à douilles à billes 202 et d'un dispositif d'amortissement 203. Le dispositif d'amortissement 203 consiste en des broches solidarisées avec les longerons et traversant les extrémités de la traverse 200, des empilages de rondelles-ressorts étant montées sur lesdites broches, maintenues sur ces dernières par l'intermédiaire d'écrous et s'appuyant sur la partie supérieure de la traverse pour réaliser une application sous pression de celle-ci sur les longerons 201.

Ainsi, en cas d'inégalité du sol sur lequel se déplace le chariot mobile 2, par exemple en cas de présence d'un creux ou d'une bosse sur le parcours des galets et/ou des rouleaux 22, 21, lesdits rouleaux ou galets transmettent une force verticale sur la traverse 200, ce qui a pour effet de mettre sous une pression supplémentaire le dispositif d'amortissement 203 et de permettre ainsi un mouvement relatif, guidé par les guidages à douilles à billes 202, par rapport aux longerons 201. Il en résulte que les dénivellations pouvant survenir pendant le déplacement du châssis mobile 2 n'ont aucun effet sur ledit châssis mobile 2, tous les mouvements étant intégralement compensés par un déplacement correspondant de la traverse 200, de sorte que la charge du châssis mobile 2 reste parfaitement stable et ne subit aucun heur.

La figure 10 des dessins annexés représente un deuxième moyen de compensation des irrégularités du sol qui équipe l'extrémité avant du cadre intermédiaire 3" et qui se présente sous forme de supports pivotants amortisseurs 300" des galets à axe horizontal d'appui au sol 32", ces supports pivotants amortisseurs 300" étant pourvus chacun d'au moins un dispositif d'amortissement 301". Chaque dispositif d'amortissement 301" consiste en une broche guidée dans le support pivotant amortisseur 300" et en un empilage de rondelles-ressorts montées sur ladite broche et maintenues sur celle-ci par l'intermédiaire d'un écrou, l'extrémité de ladite broche proche de l'écrou s'appuyant sur une traverse d'extrémité correspondante 302" de montage des supports pivotants amortisseurs 300" du cadre intermédiaire 3".

Par un tel montage des galets à axe horizontal d'appui au sol 32", sur le cadre intermédiaire 3", il est possible de réaliser un pivotement limité des supports pivotants amortisseurs 300" et donc un déplacement vertical correspondant des galets à axe horizontal d'appui au sol 32" permettant de compenser les irrégularités du sol sur lequel se déplace lesdits galets 32", de sorte que le cadre intermédiaire 3" n'est nullement influencé par de telles irrégularités pendant son déplacement.

Grâce à l'invention, il est possible de réaliser un dispositif de stockage vertical mobile pouvant être facilement installé dans des locaux qui ne sont pas spécifiquement affectés à un stockage, donc dans des locaux pouvant être transformé à peu de frais en locaux de stockage ou encore dans une partie de local ayant encore d'autres affectations.

Ce dispositif de stockage vertical est de constitution relativement simple et d'un prix de revient nettement inférieur au dispositif mobile connu à ce jour et nécessitant des infrastructures lourdes.

En outre, grâce à ce dispositif de stockage, il est possible d'augmenter de manière considérable les capacités de stockage, tout en pouvant accéder au dispositif avec des moyens de manutention utilisés habituellement.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de stockage vertical mobile, essentiellement constitué par un châssis horizontal (2), sur lequel sont montés, à intervalles réguliers, des supports (1) d'appui horizontaux (1') de réception et de stockage de produits longs, tels que des profilés, ledit châssis (2) étant mobile et coopérant avec un moyen (3) d'assujettissement au sol et de déplacement suivant son axe longitudinal **caractérisé en ce que** ledit moyen (3) d'assujettissement est constitué, d'une part, par un cadre (3') d'ancrage au sol et par un cadre intermédiaire (3"), guidé sur le cadre (3') d'ancrage au sol et formant un guidage et un support du châssis mobile (2) et, d'autre part, par un ensemble (4) de déplacement du châssis mobile (2) et du cadre intermédiaire (3 ").

2. Dispositif, suivant la revendication 1, **caractérisé en ce que** le châssis mobile (2) et les cadres intermédiaire (3") et d'ancrage au sol (3') sont montés de manière télescopique les uns dans les autres, le cadre intermédiaire (3") étant, d'une part, guidé sur le cadre d'ancrage au sol (3') et, d'autre part, servant de guidage au châssis mobile (2).

3. Dispositif, suivant l'une quelconque des revendications 1 et 2, **caractérisé en ce que** le cadre intermédiaire (3 ") est muni, à son extrémité opposée à celle pouvant être déplacée vers l'extérieur du cadre (3') d'ancrage au sol, d'une butée (5) de fin de course de sortie coopérant avec un élément en saillie (6) dudit cadre (3') d'ancrage au sol, cet élément en saillie (6) étant fixé audit cadre (3') d'ancrage au sol ou directement fixé au sol.

4. Dispositif, suivant l'une quelconque des revendications 1 à 3, **caractérisé en ce que** le cadre (3') d'ancrage au sol et le châssis mobile (2) sont réalisés sous forme de deux cornières superposées, décalées entre elles et équipées chacune avec des galets respectifs (31' et 21) prévus sur leur aile verticale et s'appuyant sur des profilés longitudinaux (31") équipant les bords correspondants du cadre intermédiaire (3"), sous ce dernier, les galets (31' et 21) étant des galets combinés à portée radiale et guidage latéral s'appuyant de part et d'autre dans les profilés longitudinaux (31"), de telle manière que le châssis mobile (2) peut se déplacer sur le cadre intermédiaire (3") sans frotter sur le cadre (3') d'ancrage au sol, un déplacement de l'ensemble cadre intermédiaire (3") et châssis mobile (2) étant ainsi possible.

5. Dispositif, suivant l'une quelconque des revendications 1 à 2 et 4, **caractérisé en ce que** le châssis mobile (2) est équipé, à son extrémité avant, d'au moins une paire de galets à axe horizontal d'appui au sol (22), qui est montée pivotable, par l'intermédiaire d'un palier à axe vertical, sur ledit châssis mobile (2).

6. Dispositif, suivant la revendication 5, **caractérisé en ce que** le châssis mobile (2) est équipé de trois paires de galets à axe horizontal d'appui au sol (22) réparties uniformément sur la largeur de la partie avant du châssis mobile (2).

7. Dispositif, suivant l'une quelconque des revendications 1 à 4, **caractérisé en ce que** le cadre intermédiaire (3 ") est pourvu, à son extrémité avant, de deux paires de galets à axe horizontal d'appui au sol (32"), qui sont montées pivotables, chacune par l'intermédiaire d'un palier à axe vertical, sur ledit cadre intermédiaire (3"), de part et d'autre de son extrémité avant, en prolongement des profilés (31") le constituant et au moins partiellement dans l'axe des galets combinés à portée radiale et guidage latéral (21) du châssis mobile (2).

8. Dispositif, suivant l'une quelconque des revendications 4 et 7, **caractérisé en ce que** les galets combinés à portée radiale et guidage latéral (21) du châssis mobile (2) sont disposés sur les ailes verticales des cornières formant le châssis mobile (2), sur une partie de la longueur de ces dernières s'étendant à partir de l'extrémité arrière dudit châssis mobile (2) qui correspond à la longueur de chevauchement du châssis mobile (2) sur le cadre intermédiaire (3"), lorsque le châssis mobile (2) est en position entièrement sortie par rapport au cadre (3') d'ancrage au sol.

9. Dispositif, suivant la revendication 1, **caractérisé en ce que** l'ensemble (4) de déplacement du châssis mobile (2) et du cadre intermédiaire (3") est constitué par une partie (4') solidaire du châssis mobile (2) et par une partie (4") coopérant avec la partie (4') solidaire du châssis mobile (2) et fixée sur un support (7) pouvant être solidarisé avec l'extrémité du cadre (3') d'ancrage au sol opposée à celle de sortie du châssis mobile (2).

10. Dispositif, suivant la revendication 9, **caractérisé en ce que** la partie (4') de l'ensemble (4), qui est solidaire du châssis mobile (2) est constituée sous forme d'une crémaillère et la partie (4") est constituée par un ensemble motoréducteur (41) fixé sur le support (7) de l'extrémité du cadre (3') d'ancrage au sol, entraînant un pignon d'entraînement (42) disposé à l'extrémité opposée dudit cadre (3') d'ancrage au sol par l'intermédiaire d'une chaîne (43) et de roues à chaîne (44).

11. Dispositif, suivant l'une quelconque des revendications 1 à 10, **caractérisé en ce que** le châssis mobile (2) est pourvu à son extrémité arrière, opposée à celle de sortie hors du cadre (3') d'ancrage au sol, d'une butée (8) de fin de course de sortie et de rétraction coopérant respectivement avec des contacts de fin de course de sortie (9) et de rétraction (10) prévus sur le cadre (3') d'ancrage au sol, ces contacts de fin de course réalisant l'arrêt automatique de l'ensemble motoréducteur (41) de l'ensemble (4) de déplacement du cadre intermédiaire (3") et du châssis mobile (2), à l'arrivée dans les positions extrêmes du châssis mobile (2).

12. Dispositif, suivant l'une quelconque des revendications 1, 9 et 10, **caractérisé en ce que** l'ensemble (4) de déplacement du cadre intermédiaire (3") et du châssis mobile (2) est commandé par l'intermédiaire d'une armoire de commande du type connu comportant au moins un interrupteur marche / arrêt et un interrupteur de sécurité, cette armoire de commande étant reliée, par ailleurs, aux butées de fin de course de sortie (9) et de rétraction (10), ainsi qu'à un moyen de sécurité (11) de mise à l'arrêt automatique prévu à l'extrémité du châssis mobile (2) sortant du cadre intermédiaire (3") et du cadre d'ancrage au sol (3'), ce moyen de sécurité étant, par exemple, un bouclier mobile, muni d'un interrupteur.

13. Dispositif, suivant l'une quelconque des revendications 1 à 12, **caractérisé en ce que** le châssis mobile (2) présente à son extrémité arrière, à savoir à l'extrémité restant guidée dans le cadre intermédiaire (3") un élément d'entraînement (12) légèrement en saillie sous ladite extrémité dudit châssis mobile (2) et pouvant coopérer avec une traverse d'extrémité (300") du cadre intermédiaire (3").

14. Dispositif, suivant l'une quelconque des revendications 1 à 12, **caractérisé en ce que** le cadre (3') d'ancrage au sol est rigidifié transversalement par l'intermédiaire de traverses planes servant simultanément à l'ancrage au sol par l'intermédiaire de tire-fonds ou analogues, la traverse arrière reliant les rails formant les côtés de ce cadre (3') servant simultanément de support à l'élément en saillie (6) destiné à coopérer avec la butée de fin de course de sortie (5) du cadre intermédiaire (3").

15. Dispositif, suivant l'une quelconque des revendications 1 à 12, **caractérisé en ce que** le cadre intermédiaire (3") est rigidifié transversalement par l'intermédiaire de profilés de liaison s'étendant à une distance du sol suffisante pour assurer un déplacement du cadre intermédiaire (3") sans risque d'accrochage avec un élément de fixation du cadre (3') d'ancrage ou avec l'élément en saillie (6) de ce cadre destiné à coopérer avec la butée de fin de course (5).

16. Dispositif, suivant l'une quelconque des revendications 1 à 13, **caractérisé en ce que** le châssis mobile (2) est constitué par les rails longitudinaux portant les galets combinés à portée radiale et guidage latéral (21) coopérant avec les profilés longitudinaux (31") du cadre intermédiaire (3"), ces rails étant rigidifiés transversalement par des traverses profilées transversales (2"), entre lesquelles sont montées les bases des supports (1) d'appui horizontaux (1') de réception de produits longs, tels que des profilés.

17. Dispositif, suivant l'une quelconque des revendications 1 à 12, **caractérisé en ce que** le cadre (3') d'ancrage au sol est pourvu, d'une part, d'un moyen (431) de guidage de la chaîne (43), ainsi que de dispositifs de réglage de la tension de cette dernière par l'intermédiaire des roues à chaîne (44) et, d'autre part, d'au moins une gaine repliable de protection des conducteurs électriques de connexion des contacts de fin de course (9 et 11).

18. Dispositif, suivant l'une quelconque des revendications 1 à 17, **caractérisé en ce qu'**il est pourvu d'un moyen d'entraînement à embrayage.

19. Dispositif, suivant la revendication 18, **caractérisé en ce que** le moyen d'entraînement à embrayage est constitué sous forme d'un embrayage à crabots, dont les crabots sont montés de manière fixe sur l'arbre d'entraînement de l'ensemble motoréducteur fixé sur le support de l'extrémité du cadre d'ancrage au sol, les crabots étant montés fous et avec possibilité de déplacement par coulissement au moyen d'une fourche de commande ou analogue sur ledit arbre d'entraînement et étant pourvu chacun d'une roue à chaîne d'entraînement d'une chaîne pour la commande du pignon d'entraînement disposé à l'extrémité opposée du cadre d'ancrage au sol.

20. Dispositif, suivant la revendication 1, **caractérisé en ce que** l'ensemble (4) de déplacement du châssis mobile (2) et du cadre intermédiaire (3") est un ensemble motoréducteur monté sur la partie distale dudit châssis mobile (2) et entraînant directement au moins un rouleau d'appui et de déplacement (21) du châssis mobile (2).

21. Dispositif, suivant la revendication 20, **caractérisé en ce que** l'ensemble motoréducteur formant l'ensemble (4) de déplacement du châssis mobile (2) et du cadre intermédiaire (3") entraîne un rouleau d'appui et de déplacement (21) du châssis mobile (2) par l'intermédiaire de son arbre de sortie (420) actionnant une paire de pignons de renvoi (421) reliés entre eux par une chaîne (422) et engrenant respectivement avec un pignon de commande (423) solidarisé avec l'arbre de sortie (420) et avec un pignon de transmission solidaire dudit rouleau d'appui et de déplacement (21).

22. Dispositif, suivant l'une quelconque des revendications 19 et 20, **caractérisé en ce que** les conducteurs électriques de connexion des contacts de fin de course et de raccordement électrique de l'ensemble (4) de déplacement du châssis mobile (2) et du cadre intermédiaire (3") sont regroupés dans un câble aérien suspendu à intervalles réguliers par l'intermédiaire d'oeillets à un câble en acier accroché par son extrémité libre en partie supérieure du support (1) d'appuis horizontaux (1') de l'extrémité avant du châssis mobile (2), ce câble en acier étant monté sur un enrouleur automatique prévu sur un support disposé à l'extrémité arrière du cadre (3') d'ancrage au sol.

23. Dispositif, suivant la revendication 1, **caractérisé en ce que** l'ensemble (4) de déplacement du châssis mobile (2) et du cadre intermédiaire (3 ") est constitué par un vérin télescopique s'appuyant par sa chape sur le support (7) solidaire de l'extrémité du cadre (3') d'ancrage au sol opposée à celle de sortie du châssis mobile (2) et par sa tige de vérin extrême sur la traverse distale du châssis mobile (2), en traversant des passages correspondants du cadre intermédiaire (3") et du châssis mobile (2).

24. Dispositif, suivant l'une quelconque des revendications 1 à 23, **caractérisé en ce qu'**il est pourvu, en outre, de moyens de compensation des irrégularités du sol.

25. Dispositif, suivant la revendication 24, **caractérisé en ce que** le châssis mobile (2) est pourvu à son extrémité avant d'un premier moyen de compensation des irrégularités du sol, sous forme d'une traverse (200) de réception des paliers des galets d'appui au sol (22) et/ou du ou des rouleaux d'appui et de déplacement (21), cette traverse (200) étant relié de manière mobile, à ses extrémités, aux longerons (201) du châssis mobile (2), par l'intermédiaire d'un guidage à douilles à billes (202) et d'un dispositif d'amortissement (203).

26. Dispositif, suivant la revendication 25, **caractérisé en ce que** le dispositif d'amortissement (203) consiste en des broches solidarisées avec les longerons et traversant les extrémités de la traverse (200), des empilages de rondelles-ressorts étant montées sur lesdites broches, maintenues sur ces dernières par l'intermédiaire d'écrous et s'appuyant sur la partie supérieure de la traverse pour réaliser une application sous pression de celle-ci sur les longerons (201).

27. Dispositif, suivant la revendication 24, **caractérisé en ce que** le cadre intermédiaire (3") est équipé à son extrémité avant d'un deuxième moyen de compensation des irrégularités du sol, qui se présente sous forme de supports pivotants amortisseurs (300") des galets à axe horizontal d'appui au sol (32"), ces supports pivotants amortisseurs (300") étant pourvus chacun d'au moins un dispositif d'amortissement (301 ").

28. Dispositif, suivant la revendication 27, **caractérisé en ce que** chaque dispositif d'amortissement (301") consiste en une broche guidée dans le support pivotant amortisseur (300") et en un empilage de rondelles-ressorts montées sur ladite broche et maintenues sur celle-ci par' l'intermédiaire d'un écrou, l'extrémité de ladite broche proche de l'écrou s'appuyant sur une traverse d'extrémité correspondante (302") de montage des supports pivotants amortisseurs (300") du cadre intermédiaire (3").

## Patentansprüche

1. Bewegliche vertikale Vorrichtung zum Lagern, die im Wesentlichen aus einem horizontalen Rahmen (2) besteht, auf dem in regelmäßigen Abständen Träger (1) für horizontale Auflagen (1') zur Aufnahme und Lagerung von langen Gegenständen, wie z.B. Profilen angeordnet sind, wobei der Rahmen (2) beweglich ist und mit einem Mittel (3) zum Festlegen auf dem Boden und zum Verlagern entlang seiner Längsachse zusammenwirkt,
**dadurch gekennzeichnet, dass**
das Mittel (3) zum Festlegen auf dem Boden zum einen von einem Rahmen (3') für das Verankern in dem Boden und einem Zwischenrahmen (3") gebildet ist, der auf dem Rahmen (3') für das Verankern in dem Boden geführt ist und der eine Führung und eine Aufnahme für den beweglichen Rahmen (2) bildet, und zum anderen von einer Verlagerungseinheit (4) für den beweglichen Rahmen (2) und den Zwischenrahmen (3") gebildet ist.

2. Vorrichtung nach Anspruch 1, **dadurch gekennzeichnet, dass** der bewegliche Rahmen (2) und der Zwischenrahmen (3") sowie der Rahmen (3') für das Verankern in dem Boden teleskopartig ineinander montiert sind, wobei der Zwischenrahmen (3") einerseits auf dem Rahmen (3') für das Verankern in dem Boden geführt ist und andererseits als eine Führung für den beweglichen Rahmen (2) dient.

3. Vorrichtung nach einem der Ansprüche 1 oder 2, **dadurch gekennzeichnet, dass** der Zwischenrahmen (3") an seinem Ende, das demjenigen Ende entgegengesetzt ist, das aus dem Rahmen (3) für das Verankern in dem Boden heraus nach außen bewegt werden kann, einen die Ausziehbewegung begrenzenden Endanschlag (5) aufweist, der mit einem Element (6) zusammenwirkt, das gegenüber dem Rahmen (3') für das Verankern in dem Boden einen Vorsprung bildet, wobei das einen Vorsprung bildende Element (6) an dem Rahmen (3') für das Verankern in dem Boden oder unmittelbar an dem Boden festgelegt ist.

4. Vorrichtung nach einem der Ansprüche 1 bis 3, **dadurch gekennzeichnet, dass** der Rahmen (3') für das Verankern in dem Boden und der bewegliche Rahmen (2) als zwei übereinander liegende, zueinander versetzt angeordnete Winkelstücke ausgebildet sind, die jeweils mit Laufrollen (31' und 21) versehen sind, die sich an ihren vertikalen Flanken befinden und die sich auf in Längsrichtung erstreckten Profilträgern (31") abstützen, die an den entsprechenden Rändern des Zwischenrahmens (3") vorgesehen sind, wobei die Laufrollen (31' und 21) unter letzterem kombiniert eine radiale Lagerfläche aufweisende und seitlich führende Rollen sind, die sich auf beiden Seiten an den sich in Längsrichtung erstreckten Profilträgern (31") abstützen, so dass sich der bewegliche Rahmen (2) auf dem Zwischenrahmen (3") bewegen kann, ohne dass er auf dem Rahmen (3') für das Verankern in dem Boden schleift, so dass auf diese Weise eine Verlagerung der von dem Zwischenrahmen (3") und dem beweglichen Rahmen (2) gebildeten Einheit möglich ist.

5. Vorrichtung nach einem der Ansprüche 1, 2 oder 4, **dadurch gekennzeichnet, dass** der bewegliche Rahmen (2) an seinem vorderen Ende mindestens ein auf dem Boden aufliegendes, schwenkbar gelagertes Paar Laufrollen (22) mit einer horizontalen Achse aufweist, das an mit einem eine vertikale Lagerachse aufweisenden Lager schwenkbeweglich auf den beweglichen Rahmen (2) montiert ist.

6. Vorrichtung nach Anspruch 5, **dadurch gekennzeichnet, dass** der bewegliche Rahmen drei Paare von auf dem Boden (22) aufliegenden Laufrollen (22) mit einer horizontalen Achse aufweist, die über die gesamte Breite der Frontpartie des beweglichen Rahmens (2) gleichmäßig verteilt angeordnet sind.

7. Vorrichtung nach einem der Ansprüche 1 bis 4, **dadurch gekennzeichnet, dass** der Zwischenrahmen (3") an seinem vorderen Ende mit zwei Paar auf dem Boden aufliegenden Laufrollen (32") mit einer horizontalen Achse versehen ist, die jeweils mit einem eine vertikale Lagerachse aufweisenden Lager an dem beweglichen Rahmen (3') schwenkbeweglich auf den beiden Seiten von dessen vorderem Ende montiert sind, wobei dieser in der Verlängerung der Profilträger (31") und wenigstens teilweise in der Achse der kombiniert eine radiale Lagerfläche aufweisenden und seitlich geführten Rollen (21) des beweglichen Rahmens (2) dargestellt wird.

8. Vorrichtung nach einem der Ansprüche 4 oder 7, **dadurch gekennzeichnet, dass** die kombiniert eine radiale Lagerfläche aufweisenden und seitlich geführten Rollen (21) des beweglichen Rahmens (2) an den vertikalen Flanken der Winkelstücke, die den beweglichen Rahmen (2) bilden, über einen Abschnitt der Länge von letzteren, ausgehend von dem hinteren Ende des beweglichen Rahmens (2), welcher der Überlappungslänge des beweglichen Rahmens (2) mit dem Zwischenrahmen (3") entspricht, wenn der bewegliche Rahmen (2) gegenüber dem Rahmen (3') für das Verankern vollständig ausgezogen ist, vorgesehen sind.

9. Vorrichtung nach Anspruch 1, **dadurch gekennzeichnet, dass** die Verlagerungseinheit (4) für den beweglichen Rahmen (2) und der Zwischenrahmen (3") von einem an den beweglichen Rahmen (2) angeschlossenen Teil (4') und einem Teil (4") gebildet ist, das mit dem an den beweglichen Rahmen (2) angeschlossenen Teil (4') zusammenwirkt und das an einem Halter (7) festgelegt ist, der mit dem Ende des Rahmens (3') für das Verankern in dem Boden verbunden sein kann, das der Öffnung für das Ausziehen des beweglichen Rahmens (2) gegenüberliegend angeordnet ist.

10. Vorrichtung nach Anspruch 9, **dadurch gekennzeichnet, dass** der Teil (4') der Verlagerungseinheit, die mit dem beweglichen Rahmen (2) einstückig ist, als eine Zahnstange ausgebildet ist, und der Teil (4") von einer Getriebeeinheit (41) gebildet ist, der auf dem Halter (7) an dem Ende des Rahmens (3') für das Verankern in dem Boden festgelegt ist, der ein Antriebsritzel (42), das an dem gegenüberliegenden Ende des Rahmens (3') für das Verankern in dem Boden angeordnet ist, mit Hilfe einer Kette (43) und Kettenrädern (44) antreibt.

11. Vorrichtung nach einem der Ansprüche 1 bis 10, **dadurch gekennzeichnet, dass** der bewegliche Rahmen (2) an seinem hinteren, der Ausziehöffnung des Rahmens (3') für das Verankern in dem Boden gegenüberliegenden Ende einen Anschlag (8) für das Einziehen und Ausziehen aufweist, der jeweils mit Endkontakten für das Ausziehen (9) und Einziehen (10) zusammenwirkt, die auf dem Rahmen (3') für das Verankern in dem Boden vorgesehen sind, wobei die Endkontakte in den Endstellungen des beweglichen Rahmens (2) das automatische Abschalten der Getriebeeinheit (41) der Verlagerungseinheit (4) für das Verlagern des Zwischenrahmens (3") und des beweglichen Rahmens (2) bewirken.

12. Vorrichtung nach einem der Ansprüche 1, 9 oder 10, **dadurch gekennzeichnet, dass** die Verlagerungseinheit (4) für das Verlagern des Zwischenrahmens (3") und des beweglichen Rahmens (2) mittels eines Schaltschranks einer bekannten Bauart gesteuert ist, der mindestens einen Ein-/Aus-Schalter und einen Sicherheitsschalter aufweist, wobei der Schaltschrank außerdem mit den Endkontakten für das Ausziehen (9) und das Einziehen (10) verbunden ist und eine Sicherheitseinrichtung (11) für das automatische Anhalten am Ende des beweglichen Rahmens (2) vorgesehen ist, der sich aus dem Zwischenrahmen (3") und dem in dem Boden verankerten Rahmen (3') heraus bewegt, wobei die Sicherheitseinrichtung z. B. als eine bewegliche, mit einem Schalter versehene Platte ausgebildet ist.

13. Vorrichtung nach einem der Ansprüche 1 bis 12, **dadurch gekennzeichnet, dass** der bewegliche Rahmen (2) an seinem hinteren Ende, damit dieses Ende in dem Zwischenrahmen (3") geführt bleibt, ein Antriebselement (12) aufweist, das geringfügig unter dem vorstehenden Ende des beweglichen Rahmens (2) hervorsteht und das mit einem Querträger (300") des Zwischenrahmens (3") zusammenwirkt.

14. Vorrichtung nach einem der Ansprüche 1 bis 12, **dadurch gekennzeichnet, dass** der Rahmen (3') für das Verankern in dem Boden mittels ebener Querbalken versteift ist, die gleichzeitig für das Verankern in dem Boden mittels Ringschrauben oder dergleichen dienen, wobei der hintere Querbalken, der die Schienen verbindet, die die Seiten des Rahmens (3') bilden, gleichzeitig als Halter für das einen Vorsprung bildende Element (6) dient, das für das Zusammenwirken mit dem Anschlag (5) für das Ausziehen des Zwischenrahmens (3") dient.

15. Vorrichtung nach einem der Ansprüche 1 bis 12, **dadurch gekennzeichnet, dass** der Zwischenrahmen (3") in Querrichtung durch Verbindungsprofile verstärkt ist, die von dem Boden beabstandet verlaufen, um ein ausreichendes Verlagern des Zwischenrahmens (3") zu gewährleisten, ohne dass dabei die Gefahr einer Kollision mit einem Befestigungselement des Rahmens (3') für das Verankern oder mit dem einen Vorsprung bildenden Element (6) des Rahmens besteht, das für das Zusammenwirken mit dem Endanschlag (5) dient.

16. Vorrichtung nach einem der Ansprüche 1 bis 13, **dadurch gekennzeichnet, dass** der bewegliche Rahmen (2) durch in die Längsrichtung erstreckte Schienen gebildet ist, welche die kombiniert eine radiale Lagerfläche aufweisenden und seitlich geführten Rollen (21) tragen, die mit den Längsprofilen (31") des Zwischenrahmens (3") zusammenwirken, wobei diese Schienen in Querrichtung mit Profilbalken (2") versteift sind, zwischen denen die Haltebasen der Träger (1) für die horizontalen Auflagen (1') zur Aufnahme und Lagerung von langen Gegenständen, wie z. B. Profilen montiert sind.

17. Vorrichtung nach einem der Ansprüche 1 bis 12, **dadurch gekennzeichnet, dass** der Rahmen (3') für das Verankern in dem Boden (3) zum einen mit einem Mittel (431) für das Führen der Kette (43) sowie Einrichtungen für das Einstellen der Spannung von letzterer mittels Kettenrädern (44) versehen ist und zum anderen mit wenigstens einer faltbaren Schutzhülle für die elektrischen Leiter zum Anschließen der Endkontakte (9 und 10).

18. Vorrichtung nach einem der Ansprüche 1 bis 17, **dadurch gekennzeichnet, dass** sie mit einem kuppelnden Antriebsmittel versehen ist.

19. Vorrichtung nach Anspruch 18, **dadurch gekennzeichnet, dass** das kuppelnde Antriebsmittel als eine Klauenkupplung ausgebildet ist, bei der die Klauen fest auf der Antriebswelle der Getriebemotoreinheit montiert sind, die auf dem Halter an dem Ende des Rahmens für das Verankern in dem Boden festgelegt ist, wobei die Klauen lose und mit der Möglichkeit einer durch eine Steuergabel oder dergleichen bewirkten Schiebebewegung auf der Antriebswelle montiert sind und für eine jede jeweils ein Kettenrad für das Antreiben einer Kette zum Antreiben des Antriebsritzels vorgesehen ist, das sich an dem Ende befindet, das dem Rahmen für das Verankern in dem Boden gegenüberliegt.

20. Vorrichtung nach Anspruch 1, **dadurch gekennzeichnet, dass** die Verlagerungseinheit (4) für den beweglichen Rahmen (2) und den Zwischenrahmen (3") als eine Getriebemotoreinheit ausgebildet ist, die auf den distalen Abschnitt des beweglichen Rahmens (2) montiert ist und die mindestens eine Rolle (21) für das Abstützen und Verlagern des beweglichen Rahmens (2) direkt antreibt.

21. Vorrichtung nach Anspruch 20, **dadurch gekennzeichnet, dass** die Getriebemotoreinheit, welche die Verlagerungseinheit (4) für den beweglichen Rahmen (2) und den Zwischenrahmen (3") bildet, eine Rolle (21) für das Abstützen und Verlagern des beweglichen Rahmens (3") mittels seiner Antriebswelle (420) antreibt, die auf ein Paar Umlenkritzel (421) wirkt, die untereinander durch eine Kette (422) verbunden sind und die jeweils mit einem Antriebsritzel (423), das an die Antriebswelle (420) angeschlossen ist, und mit einem Getriebezahnrad kämmen, das mit der Rolle (21) für das Abstützen und Verlagern zusammenwirkt.

22. Vorrichtung nach einem der Ansprüche 19 oder 20, **dadurch gekennzeichnet, dass** die elektrischen Leiter für das Anschließen der Endkontakte und das elektrische Verkabeln der Verlagerungseinheit (4) des beweglichen Rahmens (2) und des Zwischenrahmens (3") in einem Freiluftkabel zusammengefasst sind, das in regelmäßigen Abständen mit Ösen an einem Stahlseil gehalten wird, das mit seinem freien Ende an dem oberen Teil des Trägers (1) für horizontale Auflagen (1') an dem vorderen Ende des beweglichen Rahmens (2) angebracht ist, wobei dieses Stahlseil auf eine automatische Aufrollvorrichtung montiert ist, die sich auf einem Halter befindet, der an dem hinteren Ende des Rahmens (3') für das Verankern in dem Boden angeordnet ist.

23. Vorrichtung nach Anspruch 1, **dadurch gekennzeichnet, dass** die Verlagerungseinheit (4) für den beweglichen Rahmen (2) und den Zwischenrahmen (3") von einem Teleskopzylinder gebildet ist, der sich mit seinem Zylinderabschnitt auf dem Halter (7) abstützt, der mit dem Ende des Rahmens (3') für das Verankern in dem Boden verbunden ist, das dem Ende mit der Öffnung für das Ausziehen des beweglichen Rahmens (2) gegenüberliegt, und mit dem Ende seiner äußeren Schubstange auf dem distalen Querbalken des beweglichen Rahmens (2), wobei er entsprechende Durchgänge des Zwischenrahmens (3") und des beweglichen Rahmens (2) durchgreift.

24. Vorrichtung nach einem der Ansprüche 1 bis 23, **dadurch gekennzeichnet, dass** sie ausserdem mit Mittel zum Ausgleichen von Unebenheiten des Bodens versehen ist.

25. Vorrichtung nach Anspruch 24, **dadurch gekennzeichnet, dass** der bewegliche Rahmen (2) an seinem vorderen Ende eine erste Einrichtung zum Ausgleichen von Unebenheiten des Bodens in Form eines Querbalkens (200) zur Aufnahme der Lager der Laufrollen (22) für das Abstützen auf dem Boden und/oder der Laufrollen (21) für das Abstützen und das Verlagern aufweist, wobei der Querbalken (200) an seinen Enden mit den Längsträgern (201) des beweglichen Rahmens (2) über eine Führung mit einem Linear-Kugellager (202) und eine Dämpfungsvorrichtung (203) beweglich verbunden ist.

26. Vorrichtung nach Anspruch 25, **dadurch gekennzeichnet, dass** die Dämpfungsvorrichtung (203) aus Zapfen besteht, die an den Längsträgern befestigt sind und die die Enden des Querbalkens (200) durchgreifen, wobei auf die Zapfen Tellerfederstapel montiert sind, die auf letzteren mittels Muttern gehalten werden und die sich auf dem oberen Teil des Querbalkens abstützen, um ausgehend von diesem auf die Längsträger (201) eine Anpresskraft auszuüben.

27. Vorrichtung nach Anspruch 24, **dadurch gekennzeichnet, dass** der Zwischenrahmen (3") an seinem vorderen Ende eine zweite Einrichtung zum Kompensieren von Unebenheiten des Bodens aufweist, die als schwenkbare stoßgedämpfte Lagerböcke (300") für die Laufrollen mit horizontaler Achse zum Abstützen auf dem Boden (32") ausgebildet sind, wobei die schwenkbaren stoßgedämpften Lagerböcke (300") jeweils mit mindestens einer Dämpfungsvorrichtung (301") versehen sind.

28. Vorrichtung nach Anspruch 27, **dadurch gekennzeichnet, dass** jede Dämpfungsvorrichtung (301 ") aus einem in dem schwenkbaren stoßgedämpften Lagerbock (300") geführten Zapfen und aus einem Stapel Tellerfedern besteht, die auf den Zapfen montiert sind und auf diesen mit einer Mutter gehalten werden, wobei das Ende des Zapfens bei der Mutter auf einen entsprechenden End-Montageträger (302") für das Halten der schwenkbaren stoßgedämpften Lagerböcke (300") des Zwischenrahmens (3") drückt.

## Claims

1. Mobile vertical storage device, consisting essentially of a horizontal frame (2), on which horizontal (1') bearing supports (1) are mounted at regular intervals for receiving and storing long products, such as profiles, said frame (2) being mobile and cooperating with a means (3) for securing to the ground and for displacing along its longitudinal axis, **characterised in that** said securing means (3) is formed, on the one hand, by a frame (3') for anchoring to the ground and by an intermediate frame (3") guided on the frame (3') for anchoring to the ground and forming a guide and a support for the mobile frame (2) and, on the other hand, is formed by an assembly (4) for the displacement of the mobile frame (2) and the intermediate frame (3").

2. Device according to claim 1, **characterised in that** the mobile frame (2) and the intermediate frame (3") and the frame (3') for anchoring to the ground are mounted in a telescopic manner inside one another, the intermediate frame (3") being on the one hand guided on the frame for anchoring to the ground (3') and on the other hand being used for guiding the mobile frame (2).

3. Device according to any one of claims 1 or 2, **characterised in that** the intermediate frame (3") is provided, at its end opposite the one able to be displaced towards the outside of the frame (3') for anchoring to the ground, with an abutment (5) at the end of the course of extension cooperating with an element (6) projecting from said frame (3') for anchoring to the ground, said projecting element (6) being fixed to said frame (3') for anchoring to the ground or fixed directly to the ground.

4. Device according to any one of claims 1 to 3, **characterised in that** the frame (3') for anchoring to the ground and the mobile frame (2) are designed in the form of two superimposed angle sections, offset relative to one another and each equipped with respective rollers (31' and 21) provided on their vertical wing and bearing on longitudinal profiles (3 1 ") providing the corresponding edges of the intermediate frame (3") underneath the latter, the rollers (31' and 21) being combined rollers for radial extension and lateral guiding bearing on both sides in longitudinal profiles (31 "), such that the mobile frame (2) can be displaced on the intermediate frame (3") without rubbing against the frame (3') for anchoring to the ground, a displacement of the assembly of the intermediate frame (3") and mobile frame (2) thus being possible.

5. Device according to any one of claims 1 to 2 and 4, **characterised in that** the mobile frame (2) is provided, at its front end, with at least one pair of rollers with a horizontal bearing axis on the ground (22) which is mounted pivotably by means of a bearing with a vertical axis on said mobile frame (2).

6. Device according to claim 5, **characterised in that** the mobile frame (2) is provided with three pairs of bearings with a horizontal axis bearing on the ground (22) distributed uniformly over the width of the front part of the mobile frame (2).

7. Device according to any one of claims 1 to 4, **characterised in that** the intermediate frame (3") is provided at its front end with two pairs of rollers with a horizontal bearing axis on the ground (32"), which are mounted pivotably, each by means of a bearing with a vertical bearing axis, on said intermediate frame (3") on either side of its front end, in extension of the profiles (3 1 ") forming it and at least partially in the axis of the combined rollers for radial bearing and lateral guiding (21) of the mobile frame (2).

8. Device according to any one of claims 4 or 7, **characterised in that** the combined rollers for radial bearing and lateral guiding (21) of the mobile frame (2) are arranged on the vertical wings of the angle sections forming the mobile frame (2), on a part of the length of the latter extending from the rear end of the said mobile frame (2) which corresponds to the length of the overlap of the mobile frame (2) on the intermediate frame (3"), when the mobile frame (2) is in a fully extended position relative to the frame (3') for anchoring to the ground.

9. Device according to claim 1, **characterised in that** the assembly (4) for displacing the mobile frame (2) and the intermediate frame (3") is formed by a part (4') joined to the mobile frame (2) and by a part (4") cooperating with the part (4') joined to the mobile frame (2) and fixed onto a support (7) which can be joined to the end of the frame (3') for anchoring to the ground opposite the end of the extension of the mobile frame (2).

10. Device according to claim 9, **characterised in that** part (4') of the assembly (4), which is joined to the mobile frame (2), is in the form of a rail and part (4") is formed by a geared motor assembly (41) fixed onto the support (7) of the end of the frame (3') for anchoring to the ground, driving a driving pinion (42) arranged at the opposite end of said frame (3') for anchoring to the ground by means of a chain (43) and chain wheels (44).

11. Device according to any one of claims 1 to 10, **characterised in that** the mobile frame (2) is provided at its rear end, opposite the end extending out of the frame (3') for anchoring to the ground, with an abutment (8) at the end of the course of extension and retraction cooperating respectively with the contacts of the end of the course of extension (9) and retraction (10) provided on the frame (3') for anchoring to the ground, said contacts of the end of the course forming the automatic stop of the gearing reduction assembly (41) of the assembly (4) for the displacement of the intermediate frame (3") and the mobile frame (2), on reaching the extreme positions of the mobile frame (2).

12. Device according to any one of claims 1, 9 and 10, **characterised in that** the assembly (4) for displacing the intermediate frame (3") and the mobile frame (2) is controlled by means of a control box of the known type comprising at least one on/off switch and a safety switch, said control box being also connected to abutments at the end of the course of extension (9) and retraction (10), as well as to an automatic stop safety means (11) provided at the end of the mobile frame (2) exiting the intermediate frame (3") and the frame (3') for anchoring to the ground, said safety means being for example a movable shield, provided with a switch.

13. Device according to any one of claims 1 to 12, **characterised in that** the mobile frame (2) has at its rear end, namely at the end remaining guided in the intermediate frame (3") a drive element (12) projecting slightly below said end of the said mobile frame (2) and able to cooperate with an end crossbar (300") of the intermediate frame (3").

14. Device according to any one of claims 1 to 12, **characterised in that** the frame (3') for anchoring to the ground is reinforced traversely by means of plane crossbars being used simultaneously for anchoring to the ground by means of coach bolts or the like, the rear crossbar connecting the rails forming the sides of this frame (3') used simultaneously for supporting the projecting element (6) designed to cooperate with the abutment (5) at the end of the course of extension of the intermediate frame (3").

15. Device according to any one of claims 1 to 12, **characterised in that** the intermediate frame (3") is reinforced transversely by means of connecting profiles extending to a sufficient distance from the ground to ensure the displacement of the intermediate frame (3") without any risk of catching on a securing element of the anchoring frame (3') or with the element (6) projecting from said frame designed to cooperate with the abutment (5) at the end of the course.

16. Device according to any one of claims 1 to 13, **characterised in that** the mobile frame (2) is formed by longitudinal rails bearing the combined rollers for radial bearing and lateral guiding (21) cooperating with the longitudinal profiles (3 1 ") of the intermediate frame (33"), said rails being reinforced transversely by transverse profiled crossbars (2") between which the bases (1) of horizontal bearing supports (1') are mounted for receiving long products such as profiles.

17. Device according to any one of claims 1 to 12, **characterised in that** the frame (3') for anchoring to the ground is provided, on the one hand, with a means (431) for guiding the chain (43) as well as with devices for controlling the tension of the latter by means of chain wheels (44) and, on the other hand, at least one foldable sheath for protecting the electrical connecting conductors of the contacts (9 and 11) at the end of the course.

18. Device according to any one of claims 1 to 17, **characterised in that** a clutch drive means is provided.

19. Device according to claim 18, **characterised in that** the clutch drive means is in the form of a dog clutch, the claws of which are mounted in a fixed manner on the drive shaft of the geared motor assembly fixed onto the end support of the frame for anchoring to the ground, the claws being mounted idly and with the possibility of displacement by sliding by means of a control fork or the like on said drive shaft and each being provided with a drive chain wheel of a chain for controlling a drive pinion arranged at the opposite end of the frame for anchoring to the ground.

20. Device according to claim 1, **characterised in that** the assembly (4) for displacing the mobile frame (2) and the intermediate frame (3") is a geared motor assembly mounted on the distal section of said mobile frame (2) and driving directly at least one bearing and displacement roller (21) of the mobile frame (2).

21. Device according to claim 20, **characterised in that** the geared motor assembly forming the assembly (4) for the displacement of the mobile frame (2) and the intermediate frame (3") drives a bearing and displacement roller (21) of the mobile frame (2) by means of its output shaft (420) actuating a pair of deflecting pinions (421) connected together by a chain (422) and meshing respectively with a control pinion (423) connected to the output shaft (420) and with a transmission pinion joined to said bearing and displacement roller (21).

22. Device according to any one of claims 19 and 20, **characterised in that** the electrical connection conductors of the contacts at the end of the course and for the electrical connection of the assembly (4) for the displacement of the mobile frame (2) and the intermediate frame (3") are regrouped in an aerial cable suspended at regular intervals by means of eyelets to a steel cable attached at its free end in the upper part of the support (1) of horizontal bearings (1') of the front end of the mobile frame (2), said steel cable being mounted on an automatic rewinder provided on a support arranged at the rear end of the frame (3') for anchoring to the ground.

23. Device according to claim 1, **characterised in that** the assembly (4) for the displacement of the mobile frame (2) and the intermediate frame (3") is formed by a telescopic actuator bearing with its cap on the support (7) joined to the end of the frame (3') for anchoring to the ground opposite that of the extension of the mobile frame (2) and by its end actuating rod on the distal crossbar of the mobile frame (2) by traversing corresponding passages of the intermediate frame (3") and the mobile frame (2).

24. Device according to any one of claims 1 to 23, **characterised in that** means are also provided for compensating for the unevenness of the ground.

25. Device according to claim 24, **characterised in that** the mobile frame (2) is provided at its front end with a first means for compensating for the unevenness of the ground, in the form of crossbar (200) for receiving bearings of the rollers bearing on the ground (22) and/or the bearing and displacement roller(s) (21), said crossbar (200) being connected in a mobile manner, at its ends to side bars (201) of the mobile frame (2) by means of a ball sleeve guide (202) and a damping device (203).

26. Device according to claim 25, **characterised in that** the damping device (203) consists of pins joined to side bars and traversing the ends of the crossbar (200), the stacks of spring washers being mounted on said pins, supported on the latter by means of screws and bearing on the upper part of the crossbar to form a pressurised application of the latter on the side bars (201).

27. Device according to claim 24, **characterised in that** the intermediate frame (3") is provided at its front end with a second means for compensating for the unevenness of the ground which is in the form of pivoting damping supports (300") of the rollers with a horizontal bearing axis to the ground (32"), said pivoting damping supports (300") being each provided with at least one damping device (301").

28. Device according to claim 27, **characterised in that** each damping device (301") consists of a pin guided in the pivoting damping support (300") and a stack of spring washers mounted on said pin and held on the latter by means of a screw, the end of said pin close to the screw bearing on a corresponding end crossbar (302") for mounting the pivoting damping supports (300") of the intermediate frame (3").
